# EUROPÄISCHE PATENTSCHRIFT

(11) **EP 0 820 616 B1**
(45) Veröffentlichungstag und Bekanntmachung des Hinweises auf die Patenterteilung: **22.03.2000**
(21) Anmeldenummer: 95929774.8
(22) Anmeldetag: 07.09.1995
(51) Int. Cl.: G06F 17/60, G07G 1/00

(54) **VERFAHREN ZUM BETRIEB EINER SPEICHERKARTE**
METHOD FOR OPERATING A MEMORY CARD
PROCEDE D'EXPLOITATION D'UNE CARTE A MEMOIRE

(30) Priorität: 07.10.1994 DE 4435902
(43) Veröffentlichungstag der Anmeldung: 28.01.1998
(73) Patentinhaber: Siemens Nixdorf Informationssysteme AG, 33106 Paderborn (DE)
(72) Erfinder: BECKER, Klaus, 13465 Berlin (DE); NEUMANN, Jörg, 14022 Berlin (DE)
(74) Vertreter: Epping, Wilhelm, Dr.-Ing.
(86) Internationale Anmeldenummer: DE9501222
(87) Internationale Veröffentlichungsnummer: WO9611447

(56) Entgegenhaltungen:
- WO-A-87/05420
- WO-A-87/07060
- WO-A-88/01818

## Beschreibung

### Technisches Gebiet

Die Erfindung betrifft eine Einrichtung zur dauerhaften Speicherung formatierter Daten.

### Stand der Technik

In vielen Bereichen der automatischen Datenverarbeitung ist eine permanente Speicherung von Daten notwendig. Dies sind z.B. Umsätze bei Kassen oder Diagnosedaten bei elektronischen Geräten. Dabei sollen die gespeicherten Daten gegen irrtümliche Löschung und absichtliche Manipulation geschützt sein. Hierzu wird bislang ein durch die Daten bedruckter Papierstreifen benutzt.

Es ist wünschenswert, anstelle von Papierstreifen elektronische Speicher zu verwenden, um so Platz zu sparen, die Daten automatisch weiterverarbeiten zu können und eine höhere Sicherheit gegen Verfälschung zu erreichen.

In der WO 87/07060 sowie der WO 87/05420 ist eine Speicherkarte beschrieben, deren Speicher durch eine Initialisierung in eine Anzahl Datensätze fester Länge unterteilt wird und die einen Schutzmechanismus mittels verschiedener PIN besitzt.

Aufgabe der Erfindung ist es, einen solchen Speicher anzugeben, der flexibel einsetzbar ist.

### Darstellung der Erfindung

Die Erfindung nutzt Speicherkarten mit Verarbeitungsleistung aus. Dabei wird in einer Initialisierungsphase das Format der zu speichernen Daten und die Art der Auswertung festgelegt. Danach können nur noch Daten in diesem Format gespeichert werden.

### Detaillierte Beschreibung der Erfindung

Als Speicherkarte dient eine Kombination eines elektronischen Speichers mit einem Prozessor und einer Ein-Ausgabe-Vorrichtung, wie sie z.B. in der Speicherkarte SL44C40 der Firma Siemens vorliegt. Die Ein-Ausgabe-Schnittstelle wird dabei nach der ISO Norm 7816 betrieben. Wird ein größeres Speichervolumen benötigt, kann eine solche Einrichtung auch aus Komponenten auf Leiterplatten aufgebaut und anschließend vergossen werden, um eine elektrische Manipulation der Speicherinhalte auszuschließen. Alle diese Varianten werden im folgenden der Einfachheit halber als Speicherkarte bezeichnet.

Um eine solche Anordnung als Speichervorrichtung zu benutzen, wird ein Festwertspeicher in der Speicherkarte mit einem Programm ausgestattet. Zuvor wird festgelegt, welche Daten im welcher Form im EEPROM gespeichert werden sollen. Ferner wird ein Übergabeformat und -verfahren an der Schnittstelle festgelegt. Das diese Spezifikationen erfüllende Programm wird erstellt und mittels einer Programmiereinrichtung in den Festwertspeicher geschrieben. Danach ist die Speicherkarte für den vorgesehenen Zweck einsetzbar. Ändert sich das Format der zu speichernden Daten, so wird ein neuer Festwertspeicherinhalt bestimmt und in neue Karten programmiert. Die Speicherkarten werden für jede Anwendung getrennt bevorratet. Ändert sich z.B. auf Grund gesetzlicher Vorgaben der zu speichernde Inhalt, dann müssen nicht auf gebrauchte Speicherkarten vernichtet werden. Auch ist bei einer Vielzahl verschiedener Speicherformate eine umfangreiche Bevorratung notwendig.

Daher wird erfindungsgemäß ein für alle Varianten gemeinsames, festes Programm eingesetzt, welches durch einen Initialisierungdialog das Format und die Form der zu speichernden Daten bestimmt.

Die Kommunikation zwischen der Speicherkarte und einem sie benutzenden Gerät, beispielsweise einer Registrierkasse, erfolgt über ein Kommunikationsprotokoll, überwiegend nach ISO 7816. Zur besseren Verständlichkeit wird nachfolgend eine vereinfachte Darstellung verwendet. Hierbei werden Zeichenfolgen übertragen. Dabei sei ein Format gewählt, bei dem das erste Zeichen die Anzahl der Datenzeichen enthält, das zweite Zeichen ein Typkennzeichen für den Datensatz ist und die folgenden Datenzeichen vom Typ des Datensatzes abhängen. Das Format lautet also:

| Start | Anzahl | Typ | Daten | Stop |
|---|---|---|---|---|
| AA | n | 1=Init | n Zeichen Daten | 55 |
| | | 2=Ident | | |
| | | 3=Daten | | |
| | | 4=Lesen | | |

Für einen Init-Datensatz definiert jedes Datenzeichen ein Datenfeld und ist wie folgt codiert:

| Bit | Bedeutung |
|---|---|
| 7 | 1 = Summenfähig |
| 6 | 1 = BCD-codiert |
| 5..0 | Anzahl Zeichen |

Damit würde eine im Hexadezimalsystem dargestellte Zeichenfolge
AA 04 01 01 C5 82 43 55
bewirken, daß diese Nachricht vom Typ 1 eine Initialisierungsanweisung ist, die das Format nachfolgender Datensätze auf vier Felder wie folgt festlegt:
1. ein Zeichen, daß lediglich gespeichert wird,
2. fünf Zeichen, die auf BCD-Codierung geprüft werden, also Zahlen mit maximal 10 Ziffern zulassen, und einer Summenbildung zugänglich sind,
3. zwei Zeichen, die binär codiert sind und also Zahlen zwischen 0 und 65767 zulassen und einer Summenbildung zugänglich sind,
4. drei Zeichen, die BCD-codiert sechs Ziffern speichern, z.B. ein Datum, welches bei einer Summenbildung nicht berücksichtigt wird.

Danach wird mit einer Nachricht vom Typ 2 eine BCD-codierte Seriennummer "54321" gesetzt:
AA 03 02 05 43 21 AA
Nun werden beispielsweise die drei Datensätze
AA OB 03 58 00 00 01 00 35 00 05 94 06 12 55
AA OB 03 58 00 00 00 88 97 00 07 94 06 12 55
AA OB 03 58 00 00 02 00 53 00 10 94 06 13 55
übermittelt, akzeptiert und gespeichert.

Abgewiesen würden
AA 08 03 58 00 00 01 00 35 00 05 55
(falsche Feldzahl)
AA 0B 03 58 00 00 00 C8 97 00 07 94 06 12 55
(zweites Feld nicht BCD-codiert)
AA OB 03 58 00 00 02 00 53 00 10 C4 06 13 55
(viertes Feld nicht BCD-codiert)

Eine Anfrage mit Summenbildung über die ersten drei Felder würde ergeben:
AA 07 05 43 21 00 00 03 89 85 00 1C 55
also zunächst die Seriennummer, dann die Summe über die zweiten Felder in BCD-Darstellung und dann die Summe über die dritten Felder in Binärdarstellung.

Durch andere Abfragen werden die einzelnen Datensätze zugänglich gemacht.

Angenommen, der Speicher umfasse 65768 Bytes. Dann werden die ersten 32 Bytes zur Verwaltung benutzt. Hier wird die Feldaufteilung entsprechend dem ersten Datensatz und die Seriennummer eingeteilt. Da jeder zu speichernde Datensatz 11 Byte benötigt, wird der Rest von 65768-32=65736 durch 11 dividiert und ergibt eine Zahl von 5976 Datensätzen. Falls es sich um einen nur schreibbaren Speicher handelt, müßte ein zusätzliches Byte als Markierung "geschrieben" verwendet werden, also eine Satzlänge von 12 Byte und damit eine Gesamtzahl von 5478 Sätzen ergeben.

Besonders geeignet ist die Erfindung zur Speicherung von Finanzdaten in Kassen, beispielsweise die Speicherung von Tagessummen in Kassensystemen, bei denen durch gesetzliche Vorgaben eine fälschungssichere Speicherung verlangt wird.

## Patentansprüche

1. Verfahren zum Betrieb einer Speicherkarte, die einen Prozessor, eine Schnittstelle und einen nichtflüchtigen Speicher enthält und bei der Daten in Form von Datensätzen vom Prozessor über die Schnittstelle übernommen werden und in dem nichtflüchtigen Speicher abgelegt werden, wobei eine Initialisierungszeichenfolge über die Schnittstelle übertragen wird, welche mindestens die Anzahl und die Länge der zu speichernden Datenfelder enthält,
gekennzeichet dadurch, daß
- eine gültige Initialisierungszeichenfolge nur einmal entgegengenommen und ausgeführt wird,
- die Initialisierungszeichenfolge Angaben über die Codierung der Felder enthalten kann,
- nachdem eine gültige Initialisierungszeichenfolge entgegengenommen wurde,
- nur noch Datensätze engegengenommen werden, deren Codierung den in der Initialisierungszeichenfolge enthaltenen Angaben über die Codierung der Felder genügen,
- nur noch Datensätze hinzugefügt, aber keine Datensätze verändert oder gelöscht werden können.

2. Betriebsverfahren nach Anspruch 1, wobei nach Speicherung mindestens des ersten Datensatzes eine zweite Zeichenfolge die Speichereinrichtung dazu veranlaßt, Datenfelder unterschiedlicher Datensätze mittels einer in der zweiten Zeichenfolge codierten Funktion zusammenzufassen, insbesondere zu addieren, und das Ergebnis zurückzusenden.

3. Betriebsverfahren nach Anspruch 1 oder 2, wobei jedes Zeichen der Initialisierungs-Zeichenfolge ein Datenfeld bestimmt, das aus einem Bitfeld mit einem Typkennzeichen für das Datenfeld und einem Bitfeld für die Länge des Datenfeldes besteht, und wobei das Typkennzeichen mindestens einen Indikator enthält, der angibt, ob das Datenfeld für eine Summenbildung geeignet ist und wahlweise auch einen Indikator enthält, ob die Daten im binären Format oder als dezimal-gepackte Ziffern übermittelt werden.

4. Betriebsverfahren nach einem Ansprüche 1 bis 3, wobei vor der Speicherung des ersten Datensatzes eine dritte Zeichenfolge an die Speichereinrichtung übermittelt wird, welche eine Zeichenfolge enthält, die auf der Speicherkarte gespeichert wird und spätestens nach der Speicherung des ersten Datensatzes nicht mehr veränderbar ist, womit durch Wiederauslesen eine eindeutige Identifizierung des individuellen Exemplars der Karte erreicht wird.

## Claims

1. Method for operating a memory card which contains a processor, an interface and a non-volatile memory and in which data in the form of data records are accepted from the processor via the interface and are stored in the non-volatile memory, an initialization character sequence being transmitted via the interface, which contains at least the number and the length of the data fields to be stored, characterized in that
- a valid initialization character sequence is accepted and executed only once,
- the initialization character sequence can contain information concerning the coding of the fields,
- once a valid initialization character sequence has been accepted,
- only data records are accepted whose coding satisfies the information, contained in the initialization character sequence, concerning the coding of the fields,
- it is possible only to add data records, but not to alter or erase any data records.

2. Operating method according to Claim 1, wherein, following storage at least of the first data record, a second character sequence causes the memory device to combine, in particular to add, data fields of different data records by means of a function which is coded in the second character sequence, and to send back the result.

3. Operating method according to Claim 1 or 2, wherein each character of the initialization character sequence determines a data field, which comprises a bit field having a type identifier for the data field and a bit field for the length of the data field, and wherein the type identifier contains at least one indicator which indicates whether the data field is suitable for summation and, optionally, also contains an indicator as to whether the data are communicated in the binary format or as packed decimal digits.

4. Operating method according to one of Claims 1 to 3, wherein, before the storage of the first data record, a third character sequence is communicated to the memory device, which contains a character sequence which is stored on the memory card and can no longer be altered at the latest after the storage of the first data record, by which means unambiguous identification of the individual exemplar of the card is achieved by means of subsequent read-out.

## Revendications

1. Procédé d'exploitation d'une carte à mémoire, qui comprend un processeur, une interface et une mémoire non volatile et dans laquelle des données se présentant sous la forme de séquences de données sont prises en charge par le processeur en passant par l'interface et sont déposées dans la mémoire non volatile, une suite de caractères d'initialisation, qui comprend au moins le nombre et la longueur des champs de données à enregistrer, étant transmise par l'interface,
caractérisé en ce que
- une suite de caractères d'initialisation valides n'est acceptée et exécutée qu'une seule fois,
- la suite de caractères d'initialisation peut contenir des indications sur le codage des champs,
- après qu'une suite de caractères d'initialisation valides a été acceptée,
- ne sont plus acceptées que des séquences de données dont le codage peut suffire par l'intermédiaire du codage des champs aux indications contenues dans la suite de caractères d'initialisation,
- ne sont plus ajoutées que des séquences de données mais une séquence de données ne peut être modifiée ni effacée.

2. Procédé d'exploitation selon la revendication 1, dans lequel après mémorisation d'au moins la première séquence de données, une deuxième suite de caractères oblige le dispositif de mémorisation à réunir des champs de données composés de séquences de données différentes au moyen d'une fonction codée dans la deuxième suite de caractères, en particulier à les ajouter et à renvoyer le résultat.

3. Dispositif d'exploitation selon la revendication 1 ou 2, dans lequel chaque caractère de la suite de caractères d'initialisation détermine un champ de données, lequel est composé d'un champ binaire ayant un repère type pour le champ de données et d'un champ binaire pour la longueur du champ de données et dans lequel le repère type comprend au moins un indicateur qui indique si le champ de données est appropriée pour la formation d'une somme et comprend, au choix, également un indicateur destiné à indiquer si les données sont transmises au format binaire ou sous la forme de chiffres groupés sous forme décimale.

4. Procédé d'exploitation selon l'une quelconque des revendications 1 à 3, dans lequel avant la mémorisation de la première séquence de données, une troisième suite de caractères est transmise au dispositif de mémorisation, lequel contient une suite de caractères qui est mémorisée sur la carte à mémoire et qui, au plus tard après la mémorisation de la première séquence de données, ne pourra plus être modifiée, donnant ainsi une suite de caractères avec laquelle, on obtient, grâce à une nouvelle lecture, une identification univoque de l'exemplaire individuel de la carte.
